(19) **Europäisches Patentamt / European Patent Office / Office européen des brevets**

(11) **EP 2 705 330 B1**

(12) **FASCICULE DE BREVET EUROPEEN**

(45) Date de publication et mention
de la délivrance du brevet:
**02.01.2019 Bulletin 2019/01**

(21) Numéro de dépôt: **12724658.5**

(22) Date de dépôt: **20.04.2012**

(51) Int Cl.:
**G01B 5/30** (2006.01)

(86) Numéro de dépôt international:
**PCT/FR2012/000155**

(87) Numéro de publication internationale:
**WO 2012/143627 (26.10.2012 Gazette 2012/43)**

(54) **CAPTEUR PASSIF ET RÉVERSIBLE DE DÉFORMATIONS**

PASSIVER UMKEHRBARER VERFORMUNGSSENSOR

PASSIVE, REVERSIBLE DEFORMATION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2011 FR 1101274**

(43) Date de publication de la demande:
**12.03.2014 Bulletin 2014/11**

(73) Titulaires:
- **Etat français représenté par le Délégué Général pour l'Armement**
  **75509 Paris Cedex 15 (FR)**
- **Silmach**
  **25000 Besançon (FR)**

(72) Inventeurs:
- **LOUVIGNÉ, Pierre-François**
  **F-92330 Sceaux (FR)**
- **MINOTTI, Patrice**
  **F-25660 Gennes (FR)**
- **VESCOVO, Paul**
  **F-25000 Besançon (FR)**
- **WALTER, Vincent**
  **F-25000 Besançon (FR)**

(56) Documents cités:
| | |
|---|---|
| EP-A2- 1 998 145 | FR-A1- 2 784 178 |
| FR-A1- 2 893 139 | GB-A- 2 289 538 |
| JP-U- S57 137 097 | US-A- 4 075 889 |
| US-A- 5 452 335 | |

EP 2 705 330 B1

**Description**

La présente invention concerne le domaine des microcapteurs et a plus particulièrement pour objet un microcapteur apte à détecter et, préférentiellement aussi à compter, le nombre de cycles de variations de distance entre deux points ou zones d'une structure soumise à une action extérieure répétée, par exemple des cycles de températures ou de contraintes mécaniques comme par exemple le nombre de passages de véhicules sur un pont, générant un niveau de contrainte connu dans la structure.

A ce titre, on connait le brevet US5452335 qui plusieurs exemples de capteur de cycles de température dont, d'une part, un premier exemple présenté aux figures 1 et 2 et à la colonne 4, de capteur passif apte à détecter et à compter des cycles de température par rapport à un seuil de température prédéfini et, d'autre part, un second exemple présenté colonnes 10 et 11 au regard des figures 10 à 12, et qui concerne un capteur électronique de détection et de comptage de cycles de température par rapport à deux seuils de température, ce capteur comportant une alimentation électrique et un microprocesseur préprogrammé.

Dans le domaine des infrastructures routières, telle par exemple qu'un pont, il est important de connaître le nombre de véhicules l'ayant franchi afin d'en déterminer l'évolution structurelle.

A ce titre, on connaît le brevet FR2875324 qui décrit un compteur de passage de véhicules comportant principalement un microphone disposé dans une cavité acoustique et connecté à des moyens de traitement des signaux émis par le microphone. Le signal caractéristique d'un véhicule à moteur est ainsi détecté par un tel dispositif.

On connaît aussi d'autres dispositifs fonctionnant à l'aide d'ultrasons, de capteurs de pression ou de capteurs d'images et auxquels sont associés des moyens de traitement.

Ces dispositifs présentent, tout comme le second exemple susmentionné, plusieurs inconvénients :
Le premier d'entre eux concerne leur durée de vie : elle est limitée, au plus, à la durée de vie des moyens d'alimentation, à savoir des piles, soit environ un ou deux.ans.
Le second d'entre eux concerne l'impossibilité de les utiliser en complète sécurité pyrotechnique. En effet, la présence d'une différence de potentiel et donc d'un courant électrique génère un risque de formation d'étincelle ou de court-circuit pouvant engendrer un incendie voire une explosion en présence de matières détonantes.

Le troisième d'entre eux concerne leur sensibilité aux champs magnétiques à cause, notamment, de la génération de courants induits dans les circuits électriques et de la dégradation des composants électroniques qui en résulte. De plus, dans la plupart des cas, ces capteurs et les moyens de traitement associés sont de grande taille, typiquement de plusieurs dizaines de centimètres ce qui les rend très visibles et explique qu'ils sont l'objet d'actes de vandalisme.

Pour résoudre ces inconvénients, la demande de brevet EP1998145 décrit un microcapteur passif et réversible de comptage du nombre de cycles de sollicitations subis par une structure pouvant par exemple correspondre au nombre de cycles de température, de sollicitations mécaniques en traction, compression et/ou flexion engendré, par exemple, par le passages de mobiles sur cette structure dont, avantageusement, la taille n'excède pas 5 cm pour sa plus grande dimension, et préférablement 2 cm, et présentant une durée de vie quasiment illimitée, pouvant être utilisé en sécurité pyrotechnique, ne présentant aucune sensibilité aux champs électromagnétiques et qui permette un comptage sans erreur de ce nombre de cycles ou de passages.

Par réversible, il faut entendre un capteur apte à détecter un cycle de variations de distance sans se détériorer, donc apte ensuite à détecter un autre cycle.

Par moyens passifs, il faut comprendre des moyens fonctionnant sans source d'énergie contrairement aux moyens, dits actifs, utilisés dans les demandes de brevets susmentionnées et qui utilisent une source d'énergie, à savoir une alimentation électrique.

Ce microcapteur comporte des moyens de détection et de comptage des cycles de variations de distance entre deux points ou zones d'une structure, ces moyens comportant un support possédant une première et une seconde parties possédant chacune une zone d'ancrage, ces zones d'ancrage étant aptes à être fixées respectivement à l'une et à l'autre desdits deux points ou zones de la structure et étant constituées par des plots, des encoches et/ou des alésages et étant de dimensions plus faibles que celles des première et seconde parties, les moyens de comptage étant associés à chacune des dites première et seconde parties du support.

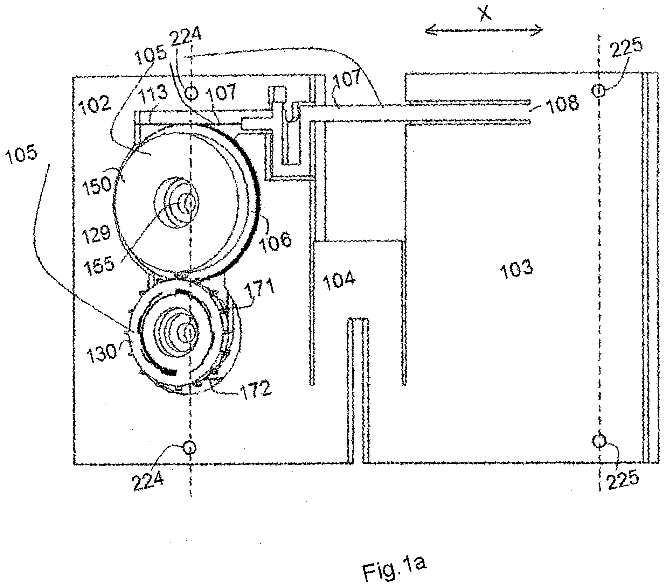

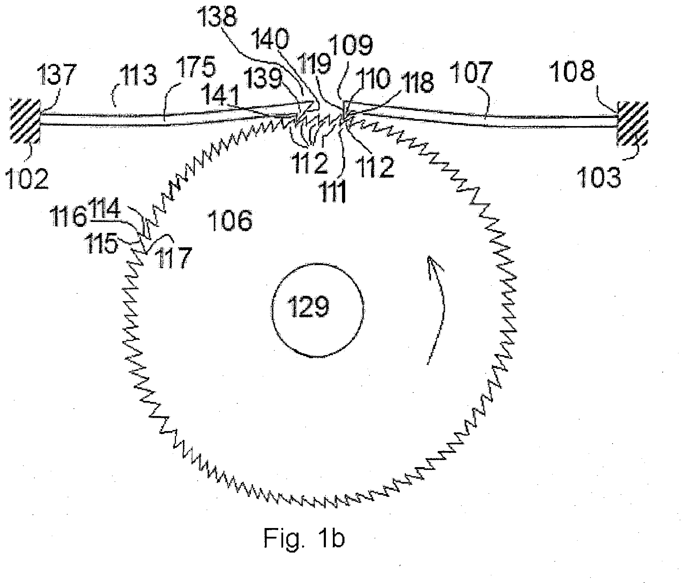

Plus précisément, et comme montré sur les figures 1a et 1b, ce microcapteur passif de détection et de comptage du nombre de passage de véhicules comprend un support 101, principalement en forme de U comportant ainsi une première partie 102 et une deuxième partie 103 reliées entre-elles par une troisième partie 104 constituant la base du U, et des moyens de comptage 105 disposés sur le support et comportant au moins une première roue dentée 106 disposée sur ladite première partie 102 du support 101 et, d'une part, une poutre d'entraînement 107 de cette première roue dentée 106 fixée, à l'une, 108, de ses extrémités 108, 109, à ladite deuxième partie 103 et comportant, à son autre extrémité 109, une dent 110, montrée sur la figure 10, et apte à constituer un engrenage 111 avec les dents 112 de la première roue dentée 106, et d'autre part, un dispositif anti-retour 113 de la première roue dentée 106 et de telle sorte que le rapprochement des première et seconde parties 102, 103 du support 101 produit un entraînement de la roue dentée 106 par la dent d'entraînement 110 de la poutre d'entraînement 107 tandis que l'éloignement de ces deux parties produit un maintien de la première roue dentée 106 par le dispositif anti-retour 113 et un escamotage de la dent 110 de la poutre d'entraînement sur une dent 112 de la première roue dentée 106.

Comme montré sur la figure 1a les premières et secondes parties comportent des première et seconde zones d'ancrage, respectivement 224 et 225, constituées par des alésages dans chacun desquels peut être insérée une vis en vue de la fixation du microcapteur sur la structure à analyser telle par exemple que le parapet d'un pont. Les alésages 224, 225 ont un diamètre légèrement supérieur à celui desdits vis.

Dans cet exemple de réalisation, les première et seconde zones d'ancrage 224, 225 sont disposées respectivement selon un premier axe Y1 et un second axe Y2 parallèles entre eux et séparés par une distance L. D'une manière préférentielle permettant de réduire au minimum la taille du capteur, ces zones d'ancrages sont disposées de telle sorte que la longueur L soit la plus grande possible et de telle sorte que la déformation de la structure entre les axes Y1 et Y2 soit au moins égale au pas P des dents de la roue de comptage. En effet, lorsque le microcapteur est fixé sur une structure soumise à une déformation, la variation de distance entre les deux zones d'ancrage 224 et 225, donc entre les axes Y1 et Y2 est proportionnelle à cette longueur L. Par conséquent, pour un pas P donné des dents de la roue de comptage, et dans le cas de l'utilisation d'une seule poutre d'entraînement, la déformation de la structure entre les axes Y1 et Y2 doit au moins être égale à P et préférentiellement inférieure ou égale à 1,5.P.

Comme montré sur la figure 1b, les faces 133, 134 et 135 des parties respectives 102, 103 et 104 du support 101 sont planes et disposées dans un même plan et destinées à être plaquées contre la structure à analyser via lesdites vis.

Dans cet exemple de réalisation la troisième partie 104 du support a elle-même une forme de U inversé avec une base 136 épaisse. Cette forme permet d'avoir des sections plus petites au niveau des branches du U de cette poutre que de la base 136 et dans le cas où une force importante était exercée au niveau de cette troisième partie une cassure surviendrait au niveau de l'une des branches et donc dans une direction parallèle à celle du déplacement normal des premières et secondes parties, ce qui permet d'éviter tout déplacement relatif entre ces parties dans la direction normale du déplacement et d'éviter un éventuel décalage entre la roue dentée 106 et la dent 110 de la poutre d'entraînement 107. Dans ce type de microcapteur, l'axe de la roue de comptage est placé sur l'axe Y1 de la première partie 102 et la poutre d'entrainement 107 est solidaire de la seconde partie 103.

Lorsqu'une structure est soumise à différents types d'efforts pouvant engendrer des déformations variables, il peut être intéressant de discriminer plusieurs catégories de déformations correspondant à différents seuils de détection. Sur un pont, plusieurs microcapteurs tels que celui des figures 1a et 1b peuvent être fixés, chacun comportant une roue de comptage avec un pas des dents différent de celui des autres. Ainsi, l'un d'entre eux peut ne compter que les passages de camion de plus de 20 Tonnes, un second que les véhicules de plus de 3,5 tonnes et un troisième tous les véhicules de plus d'une tonne. On peut aussi utiliser plusieurs capteurs identiques : en effet, un pont étant soumis à de la flexion, on peut disposer ces capteurs à des distances différentes de la fibre neutre du pont de façon à ce qu'ils détectent ainsi des événements différents.

Cependant, lorsque la structure soumise à ces déformations est de petite taille ou lorsqu'elle possède une zone d'implantation potentielle réduite, et que plusieurs seuils de détection doivent être réalisés, sa surface peut ne pas être suffisamment importante pour disposer autant de microcapteurs différents que de seuils différents à détecter.

Le but de l'invention est de remédier à cet inconvénient en proposant un microcapteur présentant tous les avantages de ceux décrits dans la demande EP1998145 ainsi que celui de pouvoir détecter plusieurs seuils.

La solution apportée est définie par l'objet de la revendication indépendante 1 qui définit un microcapteur passif et réversible de déformations, notamment de cycles de déformations selon une direction OX d'une structure notamment lors de cycles de températures ou de contraintes mécaniques subis par cette structure, ce microcapteur comportant :

- des moyens de détection, et préférablement aussi des moyens de comptage, des cycles de variations de distance entre deux points ou zones d'une structure,
- un support possédant une première et une seconde partie aptes à être fixées respectivement à l'une et à l'autre desdits deux points ou zones de la structure, les moyens de détection étant associés à chacune des dites première et seconde parties du support,

les moyens de détection de ce microcapteur comportant des moyens de discrimination d'au moins deux seuils différents de cycles de variations de distance.

Les moyens de détection comportent au moins un premier et un second ensemble de détection comportant chacun au moins une première roue dentée solidaire de l'une des première ou deuxième parties et, d'une part, une poutre d'entraînement de cette roue dentée solidarisée, directement ou indirectement, à l'une de ses extrémités, à l'autre des première ou deuxième parties et comportant, à son autre extrémité, une dent apte à constituer un engrenage avec les dents de cette première roue dentée, le pas des dents de la première roue dentée du premier ensemble étant différent de celui de la première roue dentée du second ensemble.

Selon une caractéristique additionnelle permettant l'obtention d'un microcapteur de faible encombrement surfacique, le premier et le second ensemble sont superposés.

Selon une caractéristique, le premier et le second ensemble sont juxtaposés.

Selon une caractéristique privilégiée, lesdites première et seconde partie du support sont en forme de L et sont disposées tête bêche, les bases des L formant une zone d'ancrage et l'une d'entre elle se trouvant d'un côté du support et l'autre du côté opposé du support.

Selon une caractéristique facilitant le placement du support sur une structure, les extrémités (37, 38) desdites première et seconde parties du support sont reliées entre-elles par un élément élastique.

Selon une caractéristique particulière, un microcapteur selon l'invention comporte successivement selon une direction OX, une première zone d'ancrage solidaire de l'une desdites première et seconde parties du support, un premier ensemble de détection, un second ensemble de détection, voir un troisième, un quatrième... et enfin une seconde zone d'ancrage solidaire de l'autre partie.

Selon une autre caractéristique permettant la détection et le comptage de cycle de déformations, un microcapteur selon l'invention possède un dispositif anti-retour associé à ladite première roue dentée, comportant par exemple une poutre solidaire, à l'une de ses extrémités, du premier support ou de la première partie du support et comportant, à son autre extrémité, au moins une dent apte à s'engrener sur celles de ladite première roue dentée et, préférablement, les dents de la première roue dentée comportant chacune une surface radiale et une surface inclinée reliant l'extrémité de la surface radiale de cette dent à la base de la surface radiale de la dent suivante.

Chaque ensemble comporte des moyens d'entrainement en forme de 9, possédant une première partie en O rigide et fixée à la seconde partie du support, une seconde partie élastique dont l'une des extrémités est solidaire de la première partie tandis que l'extrémité opposée est solidaire d'une troisième partie comportant une poutre principale et la poutre d'entraînement, cette dernière comportant la dent à son extrémité libre et, préférablement, la première partie du support comporte une butée apte à limiter, directement ou indirectement, la course de ladite poutre d'entraînement.

D'autres avantages et caractéristiques de l'invention apparaîtront dans la description de plusieurs variantes de réalisation de l'invention et au regard des figures annexées parmi lesquelles :

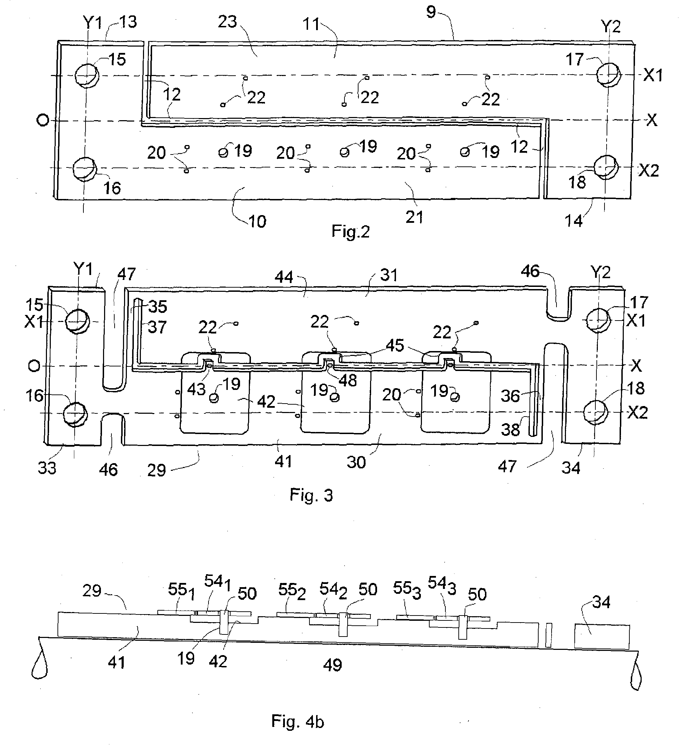

La figure 2 montre un schéma d'une première variante de réalisation d'un support 9 utilisable dans le cadre d'un capteur passif et réversible de déformations selon une direction OX d'une structure selon l'invention.

La figure 3 montre un schéma d'une seconde variante de réalisation d'un support 29 utilisable dans le cadre d'un capteur passif et réversible de déformations selon une direction OX d'une structure selon l'invention.

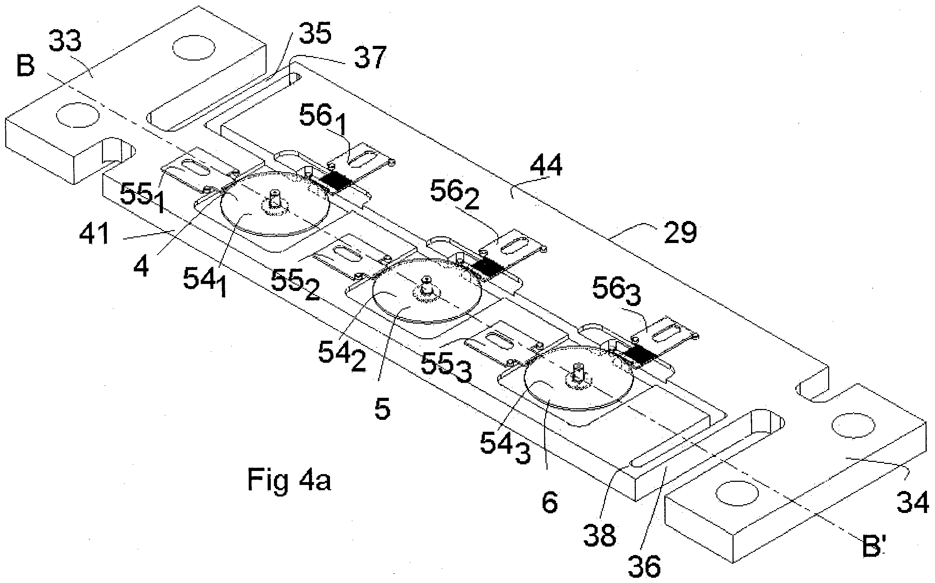

La figure 4a montre une vue en perspective du support de la figure 3 sur lequel ont été disposés des moyens de détection et des moyens de comptage,

La figure 4b présente une coupe du capteur selon l'axe BB' de la figure 4a, ce capteur étant fixé sur une structure à surveiller.

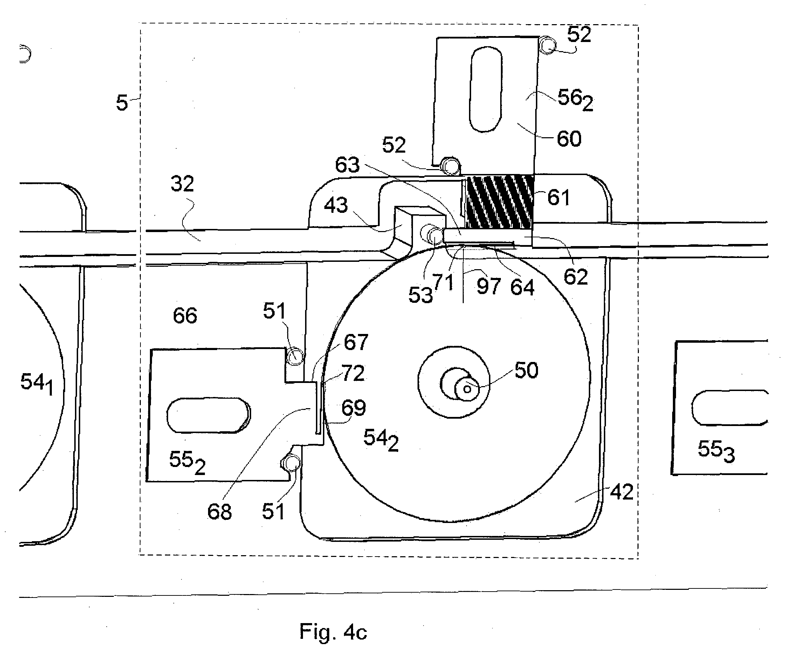

La figure 4c montre un agrandissement de l'un des ensembles de détection et de comptage.

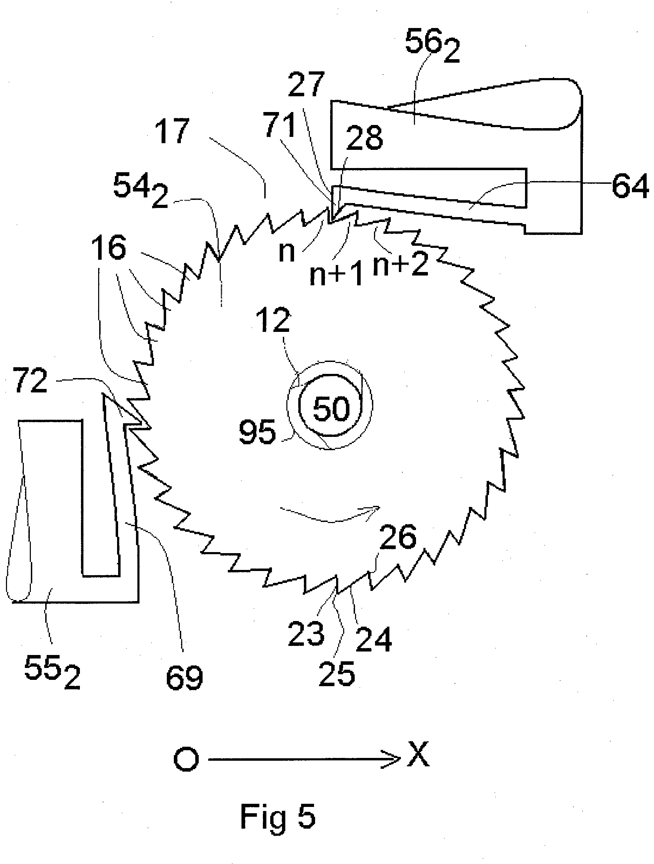

La figure 5 présente un schéma détaillé partiel de l'un des ensembles.

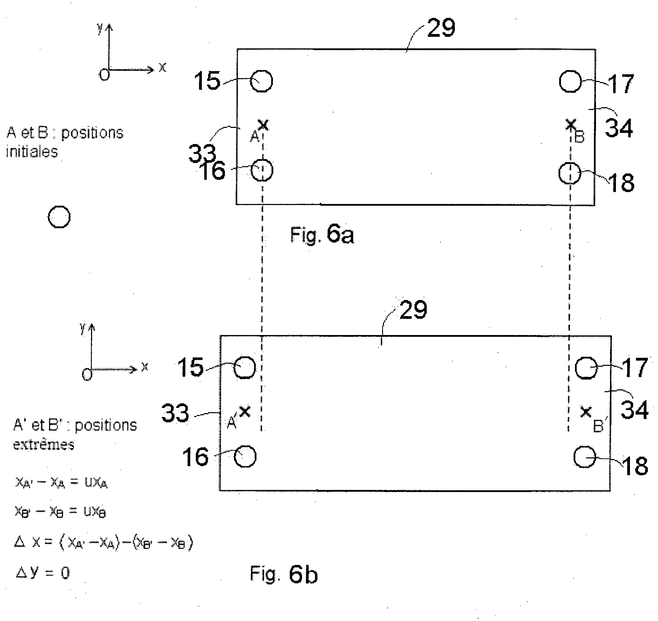

Les figures 6a et 6b présentent le principe de fonctionnement du microcapteur selon l'invention,

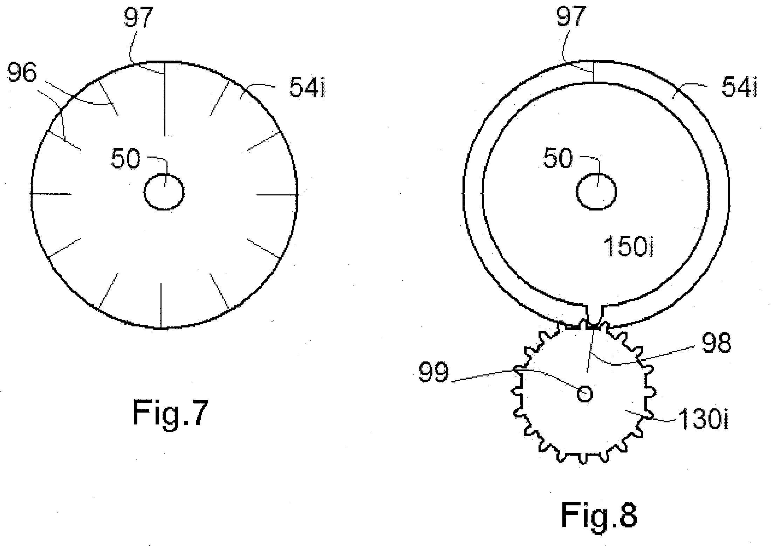

La figure 7 présente un schéma d'un premier exemple de réalisation de moyens de comptage du nombre de détections.

La figure 8 présente un schéma d'un second exemple de réalisation de moyens de comptage du nombre de détections.

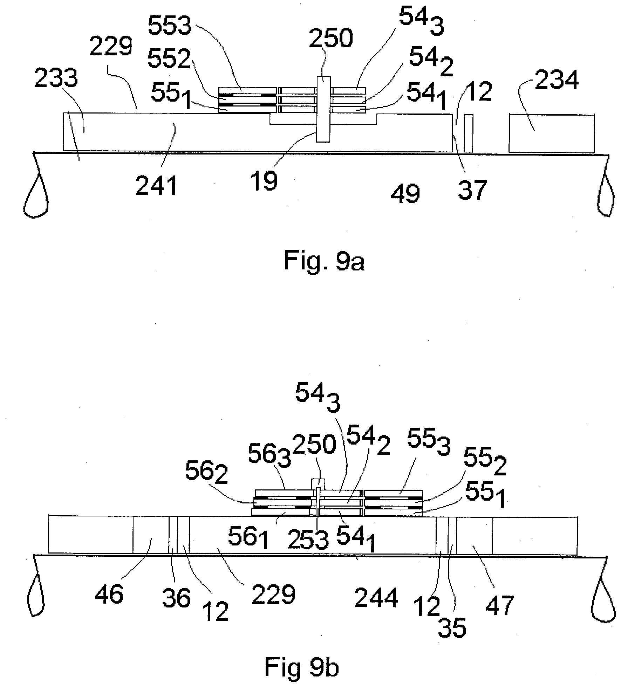

Les figures 9a et 9b présentent une autre variante de réalisation de l'invention, la figure 9a étant un schéma d'une coupe longitudinale selon OX passant par l'axe principal des roues dentées tandis que la figure 9b est une vue de côté.

La figure 2 montre un schéma d'une première variante de réalisation d'un support 9 utilisable dans le cadre d'un capteur passif et réversible de déformations selon une direction OX d'une structure selon l'invention.

Ce support 9 comporte deux sous ensembles 10, 11 en forme de L disposés tête bêche et séparés par un espace 12 et dont les bases respectives 13, 14 sont, en partie, des zones d'ancrage du support 9 sur la structure à surveiller.

Dans cet exemple de réalisation, ces bases 13, 14 comportent chacune deux alésages 15, 16 et 17, 18. Les axes Y1 et Y2 passant respectivement par les centres des alésages 15,16 et 17, 18 sont perpendiculaires à l'axe OX Tandis que les axes X1 et X2 passant respectivement par les centres des alésages 15,17 et 16, 18 sont parallèles à l'axe OX.

Les secondes parties 21, 23 des L perpendiculaires aux bases respectives 13 et 14 sont positionnées selon l'axe OX.

La seconde partie 21 du premier sous-ensemble 10 comporte trois alésages 19 régulièrement répartis le long de l'axe OX ainsi que trois couples d'alésages 20, l'axe passant par les centres d'un couple d'alésages étant parallèle à l'axe Y1 et chacun des couples est associé à l'un des alésages 19. Chaque alésage 20 est destiné à recevoir un axe dépassant du support et apte à permettre un prépositionnement de moyens anti-retour.

La seconde partie 23 du second sous-ensemble 11 comporte trois couples d'alésages 22 répartis de-même selon l'axe OX, chacun des couples 22 étant associé à l'un des alésages 19. Chaque alésage 22 est destiné à recevoir un axe dépassant du support et apte à permettre un prépositionnement de moyens d'entrainement.

Lorsqu'un tel support est fixé à une structure, par exemple par collage ou par vis, il est préférable d'introduire des cales dans l'espace 12 pour permettre un positionnement précis des sous-ensembles 10,11, l'un par rapport à l'autre.

La figure 3 montre un schéma d'une seconde variante de réalisation d'un support 29 utilisable dans le cadre d'un capteur passif et réversible de déformations selon une direction OX d'une structure selon l'invention.

Ce support 29 comporte un premier et un second sous-ensembles 30, 31 en forme de L disposés tête bêche et séparés principalement longitudinalement selon l'axe OX par un espace 32 et dont les bases respectives 33, 34 sont, en partie, des zones d'ancrage du support 29 sur la structure à surveiller.

Comme dans l'exemple précédant, ces bases 33, 34 comportent chacune deux alésages 15, 16 et 17, 18. Les axes Y1 et Y2 passant respectivement par les centres des alésages 15,16 et 17, 18 sont perpendiculaires à l'axe OX Tandis que les axes X1 et X2 passant respectivement par les centres des alésages 15,17 et 16, 18 sont parallèles à l'axe OX.

En outre, ces première et seconde parties longitudinales 41 ; 44 sont reliées entre-elles, à leurs extrémités 37, 38 par un élément élastique, en l'occurrence un cordon de matière 35 et 36.

La seconde partie 41 du premier sous-ensemble 30 comporte trois alésages 19 régulièrement répartis le long de l'axe OX ainsi que trois couples d'alésages 20, l'axe passant par les centres d'un couple d'alésages étant parallèle à l'axe Y1 et chacun des couples est associé à l'un des alésages 19. Chaque alésage 20 est destiné à recevoir un axe dépassant du support et apte à permettre un prépositionnement de moyens anti-retour.

Cette seconde partie 41 comporte autant de dépressions 42 de forme sensiblement carrée que d'alésages 19, chaque dépression étant centrée autour de l'un des alésages 19. Elle comporte aussi trois créneaux 43 dépassant de la surface latérale de la seconde partie 41 du premier sous-ensemble 30 située en regard de seconde partie 44 du second sous-ensemble 31. Pour chacun des alésages 19, l'axe passant par son centre et parallèle à l'axe Y1 est aussi un axe de symétrie de l'un des créneaux 43. Chacun de ces créneaux comporte, dans sa partie médiane, un alésage 48.

La seconde partie 44 du second sous-ensemble 31 comporte trois couples d'alésages 22 répartis de-même que les alésages 19 selon l'axe OX, chacun des couples 22 étant associé à l'un des alésages 19. Chaque alésage 22 est destiné à recevoir un axe dépassant du support et apte à permettre un prépositionnement de moyens d'entraînement.

De plus, la surface latérale de la seconde partie 44 du second sous-ensemble 31 située en regard de la seconde partie 41 du premier sous-ensemble 30 comporte des encoches 45 de dimensions supérieures à celles des créneaux 43 et destinées à permettre l'introduction des créneaux à l'intérieur.

Chacune des bases 33, 34 est partiellement séparée de la seconde partie du L correspondante par deux encoches 46, 47 coaxiales et se faisant face.

Les petites encoches 46 ne sont pas absolument indispensables, néanmoins elles présentent les avantages suivants :

- faciliter la rotation des 2 zones d'ancrage l'une par rapport à l'autre. En effet, lorsque le témoin est monté sur une structure soumise à de la flexion, il y a rotation des sections droites. Une telle architecture, en apportant de l'élasticité (compliance), permet donc d'éviter de faire croître les contraintes inutilement.
- centrer la base par rapport à la seconde partie mobile correspondante du support,
- laisser uniquement, au niveau des bases, la matière nécessaire pour supporter les sollicitations en traction ou compression.

Les grandes encoches 47 permettent de créer les éléments élastiques, à savoir des cordons de matière 35, 36 de solidarisation des sous-ensembles 30, 31 entre eux.

La figure 4a montre une vue en perspective du support de la figure 3 sur lequel ont été disposés des moyens de détection et des moyens de comptage, tandis que la figure 4b présente une coupe du capteur selon l'axe BB' de la figure 4a, ce capteur étant fixé sur une structure 49 à surveiller, et la figure 4c montre un agrandissement de l'un des ensembles de détection et de comptage.

Sur le support 29 de la figure 3, sont disposés trois ensembles 4, 5, 6 comportant chacun :

- des axes 50, 51, 52, 53 emmanchés en force dans les alésages 19, 20, 48 et 22 et dépassant du support 29 et servant de butée ou d'axe de rotation.
- une roue dentée $54_1$, $54_2$ ou $54_3$,
- des moyens anti- retour $55_1$, $55_2$ ou $55_3$
- des moyens d'entrainement $56_1$, $56_2$ ou $56_3$.

Afin de permettre la détection de plusieurs seuils de déformations différents, les roues dentées $54_1$, $54_2$ ou

$54_3$ présentent un pas de dents différent d'une roue à l'autre.

La figure 4c présente un schéma d'un agrandissement de l'ensemble 5.
Ce dernier comporte :

- des axes 50, 51, 52, 53 emmanchés en force dans les alésages 19, 20, 48 et 22 et dépassant du support 29 et servant de butée ou d'axe de rotation,
- une roue dentée $54_2$ avec un pas des dents égal à p2
- des moyens anti- retour $55_2$,
- des moyens d'entrainement $56_2$.

Les moyens d'entrainement $56_2$ comportent une plaque en forme de 9 comportant :

- une première partie 60 en O, rigide et fixée à la seconde partie 44 du second sous-ensemble 31 du support 29, l'ouverture centrale de cette première partie est constituée par une boutonnière,
- une deuxième partie 61 élastique dont l'une des extrémités est solidaire de la première partie tandis que l'extrémité opposée est solidaire d'une troisième partie 62,
- la troisième partie 62 comportant une poutre principale 63 en forme de L dont l'une des faces latérales est fixée à ladite seconde partie 61 tandis que la base est solidaire d'une poutre secondaire 64 sensiblement de même longueur et disposée parallèlement à la poutre principale mais plus fine et comportant, comme montré sur la figure 5, une dent 71 à son extrémité, cette dent étant apte , comme montré sur la figure 5, à former un engrenage de type cliquet avec la roue dentée $54_2$ . Cette troisième partie 62 forme ainsi un U dont les branches principales sont constituées par lesdites poutres principale et secondaire 63 et 64.

Par ailleurs la face latérale 65 de la première partie 60, dont une partie est solidaire de la seconde partie élastique 61, comporte une encoche sensiblement de même dimension que les axes 52 et la forme de cette première partie ainsi que le positionnement des axes 52 sur le support permettent de prépositionner parfaitement ces moyens d'entrainement avant de les fixer, par exemple par collage ou vissage, sur le support 29.

Les moyens anti- retour $55_2$ ont une forme de plaque et comportent :

- une première partie 66 en O, rigide et fixée à la seconde partie 41 du premier sous-ensemble 30 du support, l'ouverture centrale de cette première partie est constituée par une boutonnière,
- une seconde partie 67 de dimensions plus petites que celles de la première partie et comportant une poutre principale 68 en forme de L dont l'une des faces latérale est fixée à ladite première partie 66 tandis que la base est solidaire d'une poutre secondaire 69 sensiblement de même longueur et disposée parallèlement à la poutre principale mais plus fine et comportant, comme montré sur la figure 5, une dent 72 à son extrémité, cette dent étant apte , comme montré sur la figure 5, à former un engrenage de type cliquet avec la roue dentée $54_2$ Cette seconde partie forme ainsi un U dont les branches principales sont constituées par lesdites poutres principale et secondaire 68 et 69.

Par ailleurs la face latérale 70 de la première partie 66 dont une partie est solidaire de la seconde partie 67 comporte une encoche 70 sensiblement de même dimension que le diamètre des axes 51 et la forme de cette face latérale 70 ainsi que le positionnement des axes 52 sur le support permettent de prépositionner parfaitement ces moyens d'entrainement avant de les fixer, par exemple par collage ou vissage, sur le support 29.

Dans cet exemple de réalisation, les premières et secondes zones d'ancrage 33, 34 sont disposées respectivement selon un premier axe Y1 et un second axe Y2 parallèles entre eux et séparés par une distance L. D'une manière préférentielle permettant de réduire au minimum la taille du capteur, ces zones d'ancrages sont disposées de telle sorte que la longueur L soit la plus grande possible et de telle sorte que la déformation de la structure entre les axes Y1 et Y2 soit au moins égale au pas p des dents de la roue dentée. En effet, lorsque le microcapteur est fixé sur une structure soumise à une déformation, la variation de distance entre les deux zones d'ancrage 33 et 34, donc entre les axes Y1 et Y2 est proportionnelle à cette longueur L. Par conséquent, pour un pas p donné des dents de la roue dentée, et dans le cas de l'utilisation d'une seule poutre d'entraînement associée à cette roue, la déformation de la structure entre les axes Y1 et Y2 doit au moins être égale à p. Par ailleurs, la fonction de l'axe 53 inséré dans l'alésage 48 du créneau 43 est de limiter, dans la direction OX, la course de la poutre principale 63 à une valeur environ égale à 1,5 fois le pas p des dents de la roue dentée associée. Comme la poutre secondaire d'entrainement de la roue est solidaire et parallèle à la poutre principale, son déplacement selon OX sera aussi limité à 1,5 fois le pas p des dents de la roue dentée associée. Par conséquent, avec cet axe 53 constitutif d'un dispositif de limitation, tout déplacement selon OX supérieure audit pas des dents ne provoquera la rotation de la roue dentée que d'un angle correspondant à une seul dent. Sans cet axe 53, tout déplacement $\Delta x$ (écartement entre les zones d'ancrage de $\Delta x$) de la structure selon OX supérieur à p provoquerait un déplacement de la dent 71 de la poutre secondaire de $\Delta x$ et donc l'entrainement en rotation de la roue d'un angle égal à la partie entière du rapport :

$$(\Delta x/p)$$

En conclusion, la fonction de l'axe 53 est, indirectement, de limiter le déplacement de la poutre d'entraînement 64 en direction de la base 33 du premier sous-ensemble 30 du support 29, d'une valeur calibrée et correspondant sensiblement à la valeur d'un pas et demi des dents de la première roue dentée. Cet axe 53 constitue ainsi un moyen de limitation de la course de la dent 71 de la poutre secondaire d'entraînement 64, ou, en d'autres termes, de butée.

Chacune des roues dentées comporte un repère 97, consistant par exemple en une gravure rectiligne disposée par exemple en face de la dent 71 de la poutre secondaire d'entrainement 64 lors de la mise en place du capteur et permettant le comptage du nombre de cycles de déformations subis par la structure par simple comptage des dents de la roue dentée située entre le repère 97 et la dent 71 et dans le sens opposé du sens de rotation de la roue.

Comme montré sur la figure 5, cette roue dentée $54_2$ comporte des dents 16 sur sa surface périphérique externe 17 et une surface périphérique interne 95, préférentiellement rugueuse destinée à coopérer avec un manchon 12 solidaire de l'axe 50 pour former un couple résistant et empêcher une autorotation de la roue dentée $54_2$. La poutre secondaire 64 des moyens d'entrainement, appelée poutre d'entraînement 64 dans la suite, comporte une dent 71 au niveau de son extrémité libre 73, cette dent 71 étant apte à former un engrenage, de type cliquet, avec celles 16 de ladite roue $54_2$.

Sur cette figure, la direction OX indique la direction des déformations aptes à être détectées par ce capteur tandis que la flèche indique le sens normal de rotation de la roue $54_2$ de comptage. Selon cette direction, chacune des dents 16 de cette roue dentée $54_2$ comporte une première surface radiale 23 et une surface inclinée 24 reliant l'extrémité supérieure 25 de ladite première surface radiale à la base 26 de la surface radiale de la dent suivante. Selon cette même direction, la dent 71 solidaire de la poutre d'entraînement 64 comporte une surface inclinée 28 et une surface radiale 27, cette dernière se trouvant en vis-à-vis avec ladite première surface radiale 23 d'une dent 16 de la roue $54_2$.

Ainsi la dent 71 de la poutre d'entraînement présente une face d'entraînement qui vient en contact avec une dent de la roue dentée pour entrainer cette roue en rotation lors d'un déplacement dans un sens de l'élément entraînant et une face de guidage autorisant le glissement, et donc l'escamotage, de l'élément entraînant sur la dent de la roue dentée lors d'un déplacement dans le sens opposé au précédent de l'élément entraînant dans la mesure ou la roue dentée est alors bloquée par les moyens anti-retour.

La poutre d'entraînement présente une élasticité suffisante pour permettre l'escamotage d'une dent 16 sans détérioration. De plus, les poutres d'entraînement et d'anti-retour présentent une flèche lorsqu'elles sont en place contre la roue. Cette déformation initiale permet de garantir le contact et donc l'engrènement malgré les défauts et incertitudes de fabrication/assemblage.

Les figures 6a et 6b présentent le principe de fonctionnement du microcapteur selon l'invention.

Comme montré sur ces figures, lorsqu'un tel capteur est fixé, par ses deux zones d'ancrage 33, 34 ,par exemple par des plots de colle introduite dans les alésages 15, 16, 17 et 18, sur une structure 49 soumise à une sollicitation produisant une déformation, par exemple une élongation seulement dans la direction Ox, cette déformation de la structure va engendrer une variation de l'écartement entre ces plots donc de leur centre respectifs. Soient A et B les centres respectifs des plots dans leur position initiale ou normale et xA et xB leurs coordonnées selon l'axe Ox. Lorsque la structure 49 est soumise à une sollicitation, l'écartement entre les plots varie et les points A et B se retrouvent dans les positions extrêmes A' et B', leurs coordonnées étant alors xA' et xB' tandis que les plots reviennent dans leur position initiale, voire légèrement différente, à la fin de la sollicitation ou un certain temps après.

La différence de coordonnées entre la position initiale et la position extrême est donnée par l'expression suivante :

$$\Delta x = (xA' - xA) - (xB' - xB)$$

$\Delta y = 0$ d'après l'hypothèse susmentionnée.

Cette différence d'écartement entre les plots entraîne une variation de positionnement entre les secondes parties 41, 44 des premier et second sous-ensembles, respectivement 30 et 31. Comme les roues dentées $54_1$, $54_2$, et $54_3$ sont solidaires de la seconde partie 41 du premier sous ensemble 30 et que chacune des poutres d'entraînement 64 comporte une dent 71 engrenée sur l'une des roues dentées, ladite variation de positionnement produit un entraînement correspondant des roues dentées par lesdites poutres d'entraînement 64 dans le sens de la flèche.

Comme les roues dentées $54_1$, $54_2$, et $54_3$ ont des pas de dents p1, p2, p3 différents, par exemple avec p1<p2<p3, la déformation $\Delta x$ subie par la structure 49 sera détectée ou non en fonction de sa valeur et de la valeur des pas comme indiqué dan le tableau ci-après.

| Déformation Δ | Inférieure à p1 | Comprise entre p1 et p2 | Comprise entre p2 et p3 | Supérieure à p3 |
|---|---|---|---|---|
| Roue $54_1$ | Non détection | Détection | Détection | Détection |
| Roue $54_2$ | Non détection | Non détection | Détection | Détection |
| Roue $54_3$ | Non détection | Non détection | Non détection | Détection |

La figure 7 présente un schéma d'un premier exemple de réalisation de moyens de comptage du nombre de détections dans lequel ils consistent simplement en des repères, par exemple gravés sur la face visible de la roue, avec un repère principal 97 au dessus duquel est placé la dent 71 de la poutre secondaire d'entrainement 64 lors de la mise en service du capteur et des repères secondaires 96 régulièrement répartis par exemple tous les 50 dents sur la périphérie de la roue dentée 56i.

Toutefois, en l'espèce, ces moyens de comptage ne permettent pas de compter un nombre de cycles de déformations successifs supérieur au nombre de dents de la roue.

La figure 8 présente un schéma d'un second exemple de réalisation de moyens de comptage du nombre de détections permettant de résoudre l'inconvénient précité. Ces moyens de comptage comportent :

- un repère principal 97 au dessus duquel est placée la dent 71 de la poutre secondaire d'entrainement 64 lors de la mise en service du capteur une roue,
- Une seconde roue dentée 150i fixée de manière coaxiale sur la roue dentée 54i et comportant une seul dent 151,
- Une troisième roue dentée comportant par exemple 20 dents et apte à être entrainée d'un angle égal à $2\pi/20$ par la dent 151 à chaque tour de la roue dentée 54i.

Ces moyens permettent de compter un nombre de cycles de déformations compris entre 0 et 20 fois le nombre de dents présentes sur la roue dentée 54i.

Par ailleurs, des moyens optiques de comptage peuvent être utilisés par exemple ceux décrits dans la demande de brevet FR2875324.

Les figures 9a et 9b présentent une autre variante de réalisation de l'invention, la figure 9a étant un schéma d'une coupe longitudinale selon OX passant par l'axe principal des roues dentées tandis que la figure 9b est une vue de côté.

Dans cet exemple de réalisation, le support est semblable à celui de la figure 3 mais plus court. Il comporte deux zones d'ancrage opposées 233 et 234 délimitées partiellement par des encoches 46, 47 et des première et seconde parties longitudinales 241, 244 séparées par un espace 12. En outre, chacune ces première et seconde parties longitudinales 241, 244 sont reliées entre-elles, à leurs extrémités, par un élément élastique, en l'occurrence un cordon de matière 35 et 36.

Les moyens de détection comportent trois ensembles superposés comportant chacun

- une roue dentée $54_i$,
- des moyens anti- retour $55_i$,
- des moyens d'entrainement $56_i$, Les roues dentées $54_1$, $54_2$ ou $54_3$ sont mobiles autour d'un même axe 250 solidaire du support 229 et comportent des pas de dent p1, p2 et p3 différents (avec p1>p2>p3) permettant ainsi la détection de trois seuils de déformations différents. Dans cet exemple de réalisation, elles comportent le même nombre de dents, à savoir 1000 ; De ce fait elles, leurs diamètres sont différents et celle $54_1$ ayant le plus grand diamètre et un pas des dents p1, est disposée la première sur l'axe 250 puis sont disposées respectivement sur l'axe 250 la roue dentée $54_2$ puis la roue dentée $54_3$ l'en semble de ces roue ayant une forme globale tronconique dont la base est située en regard de la première partie longitudinale 241.

Les moyens anti-retours $55_1$, $55_2$ ou $55_3$ sont identiques à l'exception de la dent d'entraînement qui est adaptée au pas de la roue correspondante et sont fixés les uns au dessus des autres, avec un décalage afin que la dent de chacun d'entre eux soit en contact avec une dent de la roue qui lui correspond. Une entretoise en forme de O les sépare. Ces moyens sont identiques à ceux décrit dans le cadre des figures 4a à 5.

Les moyens d'entrainement $56_1$, $56_2$ ou $56_3$ sont identiques à l'exception de la dent d'entraînement qui est adaptée au pas de la roue correspondante et fixés les uns au dessus des autres, une entretoise en forme de O les séparant mais ils sont décalés selon OX de sorte que sans déformation, la distance séparant l'extrémité de sa poutre principale à la butée 253 soit respectivement d'environ :

1,5 x p1 pour les moyens $56_1$
1,5 x p2 pour les moyens $56_2$
1,5 x 3 pour les moyens $56_3$

Pour le comptage des cycles de déformation, chaque roue dentée comporte à sa périphérie une numérotation de 0 à 980 avec un incrément de 20 dents et la première partie longitudinale 241 comporte une gravure rectiligne disposée suivant le rayon des roues et au niveau de laquelle est placée, pour chacune des roues, la numérotation 0 lors de l'insertion de ces roues sur l'axe 250. En cours d'utilisation, les roues ayant des diamètres différents, il suffit d'effectuer une lecture visuelle, pour chaque roue, de la numérotation figurant au niveau de la gravure rectiligne.

Les modes de réalisation précédemment décrits présentent, par rapport à l'état de la technique, de nombreux avantages. Ainsi, le microcapteur est totalement passif, et c'est l'événement lui-même (action d'un objet apte à fléchir une structure) qui fourni l'énergie nécessaire à l'activation des fonctions de détection et de comptage.

Dans le cas présent, le microcapteur est mis en service pour une durée qui n'est pas limitée par la durée de vie de la source d'énergie. Compte tenu de la nature même des matériaux utilisés, en l'occurrence du silicium, l'espérance de vie du capteur est dans tous les cas très supérieure à celle de tous les systèmes d'arme y compris pour des systèmes passifs stockés pour de très longues périodes.

Dans le cas présent, le caractère inerte du compteur permet d'envisager de l'appliquer sur un système fonctionnant en sécurité pyrotechnique, ce qui procure une avancée considérable par rapport aux capacités actuelles. De plus, un microcapteur selon l'invention est totalement insensible aux champs électromagnétiques.

De plus, il permet de simplifier le montage : moins d'implantations (Nombre de trous taraudés, de collages, de brides), de réduire le coût et d'augmenter la discrétion.

En outre, la solution proposée est très simple à mettre en oeuvre et son fonctionnement très fiable. Il est indépendant d'une source d'énergie, discret, et d'un coût unitaire faible.

En outre, la dent de la poutre anti-retour peut être remplacée par un patin de frottement apte à appliquer une force de frottement sur la roue dentée de comptage. Son rôle est double. Dans les deux cas, c'est la force de frottement du patin sur la roue qui lui permet de jouer son rôle. Cette force de frottement est déterminée par la précontrainte de la poutre patin. Il limite d'une part une rotation excessive due à des effets inertiels de la roue de comptage dans le sens normal de rotation. Il empêche d'autre part une rotation de la roue de comptage dans le sens inverse du sens normal lors du retour de la dent d'entraînement, pour peu que la force de frottement du patin soit supérieure à celle de la poutre d'entraînement sur la roue.

Par ailleurs, dans le cas où l'on souhaite compenser les différences de dilatations thermiques entre le capteur et la structure, il est, d'une part, préférable de réaliser les supports du capteur en une matière dont le coefficient de dilatation thermique est proche de celui du matériau de la structure, et, d'autre part, de compenser géométriquement, via la forme des dites première et seconde partie du support et le positionnement de la roue de comptage, cette dilatation thermique.

Par ailleurs, dans le cadre de la figure 5, la liaison entre l'axe 50 et la roue dentée pourrait être du type liaison pivot, par exemple du type axe/moyeu, axe + 2 roulements, axe + 2 paliers lisses ou axe + 2 rubis et le couple résistant pourrait alors être assuré par le module anti-retour.

## Revendications

**1.** Microcapteur passif et réversible de déformations, notamment de cycles de déformations selon une direction OX d'une structure (49) lors de cycles de températures ou de contraintes mécaniques subis par cette structure (49), ce microcapteur comportant

- des moyens de détection (4, 5, 6) et, des moyens de comptage des cycles de variations de distance entre deux points ou zones d'une structure (49),
- un support (9, 29, 229) possédant

- une première (10, 41, 241) et
- une seconde partie (11, 44, 244) aptes à être fixées respectivement à l'un et à l'autre desdits deux points ou zones de la structure (49),

les moyens de détection (4, 5, 6) étant disposés sur le support (9, 29, 229), et étant associés à chacune des dites première (10, 41, 241) et seconde (11, 44, 244) parties du support (9, 29, 229), microcapteur **caractérisé en ce que** les moyens de détection comportent des moyens (541, 542 , 543, 551, 552 , 553, 561, 562, 563) de discrimination d'au moins deux seuils différents de cycles de variations de distance,

les moyens de détection comportant au moins un premier et un second ensemble de détection (4, 5, 6) comportant chacun au moins

- une première roue dentée (541, 542 , 543) solidaire de l'une des première (10, 41, 241) ou deuxième parties (11, 44, 244) et,
- une poutre d'entraînement (64) de cette première roue dentée (541, 542 , 543) solidarisée, directement ou indirectement, à l'une de ses extrémités, à l'autre des première (10, 41, 241) ou deuxième parties (11, 44, 244) et comportant, à son autre extrémité,
- une dent (71) apte à constituer un engrenage avec les dents de cette première roue dentée (541, 542 , 543), le pas p1 des dents de la première roue dentée (541, 542, 543) du premier ensemble (4, 5, 6) étant différent de celui p2 de la première roue dentée (541, 542, 543) du second ensemble (4, 5, 6),
- des moyens d'entraînement (561, 562, 563) en forme de 9, possédant

- une première partie (60) en O rigide et fixée à la seconde partie (44) du support (29),
- une seconde partie (61) élastique dont l'une des extrémités est solidaire de la première partie tandis que l'extrémité opposée est solidaire
- d'une troisième partie (62) comportant une poutre principale (63) en forme de L dont l'une des faces latérales est fixée à ladite seconde partie (61) tandis que la base est solidaire de la poutre d'entrainement (64) sensiblement de la même longueur et disposée parallèlement à la poutre principale (63) mais plus fine,

la poutre d'entraînement (64) comportant la dent (71) à son extrémité libre et, la première partie du support (41) comportant une butée (53) apte à limiter la course de la poutre principale (63) et indirectement la course de la poutre d'entraînement (64).

2. Microcapteur passif et réversible selon la revendication 1, **caractérisé en ce que** lesdits premier et second ensembles sont superposés.

3. Microcapteur passif et réversible selon la revendication 1, **caractérisé en ce que** lesdits premier et second ensembles sont juxtaposés.

4. Microcapteur passif et réversible selon l'une quelconque des revendications 1 à 3, **caractérisé en ce que** lesdites première et seconde partie du support sont en forme de L et sont disposées tête bêche, les bases des L formant une zone d'ancrage et l'une d'entre elle se trouvant d'un côté du support et l'autre du côté opposé du support.

5. Microcapteur passif et réversible selon l'une quelconque des revendications 1 à 4, **caractérisé en ce que** les extrémités (37, 38) desdites première et seconde parties du support sont reliées entre-elles par un élément élastique (35, 36).

6. Microcapteur passif et réversible selon l'une quelconque des revendications 1 à 5, **caractérisé en ce qu'**il comporte successivement selon une direction OX, une première zone d'ancrage (13, 33, 233) solidaire de l'une desdites première et seconde parties (10, 41, 241) du support (9, 29, 229), et une seconde zone d'ancrage (14, 34, 234) solidaire de l'autre partie (11, 44, 244).

7. Microcapteur passif et réversible selon l'une quelconque des revendications 1 à 6, **caractérisé en ce que** chaque ensemble comporte des moyens anti-retours associés à la roue dentée, ces moyens comportant une poutre solidaire, à l'une de ses extrémités, de la première partie du support et comportant, à son autre extrémité, au moins une dent apte à s'engrener sur celles de la roue dentée et, préférablement, les dents de la première roue dentée comportant chacune une surface radiale et une surface inclinée reliant l'extrémité de la surface radiale de cette dent à la base de la surface radiale de la dent suivante.

**Patentansprüche**

1. Passiver und umkehrbarer Mikrosensor von Verformungen, insbesondere Zyklen von Verformungen gemäß einer Richtung OX einer Struktur (49) bei Zyklen von Temperaturen oder mechanischen Beanspruchungen, denen diese Struktur (49) unterzogen wird, wobei der Mikrosensor Folgendes umfasst::

- Mittel zum Nachweis (4, 5, 6) und Mittel zum Zählen der Zyklen von Variationen des Abstands zwischen zwei Punkten oder Zonen einer Struktur (49),
- eine Stütze (9, 29, 229), die Folgendes aufweist:

- einen ersten (10, 41, 241) und
- einen zweiten Teil (11, 44, 244), die ausgelegt sind, um jeweils an den einen und an den anderen der zwei Punkte oder Zonen der Struktur (49) fixiert zu sein,

wobei die Nachweismittel (4, 5, 6) auf der Stütze (9, 29, 229) angeordnet sind und mit jedem der ersten (10, 41, 241) und zweiten (11, 44, 244) Teile der Stütze (9, 29, 229), assoziiert sind,
Mikrosensor, **dadurch gekennzeichnet, dass** die Mittel zum Nachweis Mittel (541, 542, 543, 551, 552, 553, 561, 562, 563) zur Unterscheidung von mindestens zwei verschiedenen Schwellen von Zyklen von Variationen des Abstands umfassen,
wobei die Mittel zum Nachweis mindestens eine erste und eine zweite Einheit zum Nachweis (4, 5, 6) umfassen, umfassend jeweils mindestens Folgendes:

- a first toothed wheel (541, 542 , 543) integral with one of the first (10, 41, 241) or second portion (11, 44, 244) and,
- a driving (64) for driving this first toothed wheel (541, 542, 543), made integral, directly or indirectly, at one of its two ends, to the other of the first (10, 41, 241) or second portion (11, 44, 244) and comprising, at its other end,
- a tooth (71) able to form a gearing with the teeth of the this first toothed wheel (541, 542 , 543), the pitch p1 of the teeth of the first toothed wheel (541, 542, 543) of the first assembly (4, 5, 6) being different from the pitch p2 of the first toothed wheel (541, 542, 543) of the second assembly (4, 5, 6),
- ein erstes Zahnrad (541, 542 , 543), das fest mit einem der ersten (10, 41, 241) oder zweiten Teile (11, 44, 244) verbunden ist, und
- einen Antriebsträger (64) dieses ersten Zahnrads (541, 542, 543), der direkt oder indirekt an einem seiner Enden an den anderen der ersten (10, 41, 241) oder zweiten Teile (11, 44, 244) fest verbunden ist und umfassend, an seinem anderen Ende,
- einen Zahn (71), der ausgelegt ist, um einen Eingriff mit den Zähnen dieses ersten Zahnrads (541, 542, 543) zu bilden, wobei die Teilung p1 der Zähne des ersten Zahnrads (541, 542, 543) der ersten Einheit (4, 5, 6) verschieden von derjenigen p2 des ersten Zahnrads (541, 542, 543) der zweiten Einheit (4, 5, 6) ist,
- Antriebsmittel (561, 562, 563) in Form von 9, die Folgendes aufweisen:

- einen ersten Teil (60) in Form eines starren O und fixiert an den zweiten Teil (44) der Stütze (29),
- einen zweiten elastischen Teil (61), von dem eines der Enden fest mit dem ersten Teil verbunden ist, während das gegenüber liegende Ende fest verbunden ist mit:
- einem dritten Teil (62), der einen Hauptträger (63) in Form eines L aufweist, wobei eine der lateralen Seiten an den zweiten Teil (61) fixiert ist, während die Basis fest mit dem Antriebsträger (64) verbunden ist, im Wesentlichen der gleichen Länge und angeordnet parallel zum Hauptträger (63), jedoch dünner,

wobei der Antriebsträger (64) den Zahn (71) an seinem freien Ende umfasst und der erste Teil der Stütze (41) einen Anschlag (53) umfasst, der ausgelegt ist, um den Weg des Hauptträgers (63) und indirekt den Weg des Antriebsträgers (64) zu begrenzen.

2. Passiver und umkehrbarer Mikrosensor nach Anspruch 1, **dadurch gekennzeichnet, dass** die ersten und zweiten Einheiten übereinandergestellt sind.

3. Passiver und umkehrbarer Mikrosensor nach Anspruch 1, **dadurch gekennzeichnet, dass** die ersten und zweiten Einheiten aneinander gestellt sind.

4. Passiver und umkehrbarer Mikrosensor nach einem beliebigen der Ansprüche 1 bis 3, **dadurch gekennzeichnet, dass** der erste und zweite Teil des Trägers die Form eines L aufweisen und entgegengesetzt angeordnet sind, wobei die Basen der L eine Verankerungszone bilden und sich die eine von ihnen an einer Seite der Stütze und die andere an der gegenüberliegenden Seite der Stütze befinden.

5. Passiver und umkehrbarer Mikrosensor nach einem beliebigen der Ansprüche 1 bis 4, **dadurch gekennzeichnet, dass** die Enden (37, 38) der ersten und zweiten Teile der Stütze untereinander durch ein elastisches Element (35, 36) verbunden sind.

6. Passiver und umkehrbarer Mikrosensor nach einem beliebigen der Ansprüche 1 bis 5, **dadurch gekennzeichnet,**

**dass** er, aufeinander folgend, gemäß einer Richtung OX, eine erste Verankerungszone (13, 33, 233), die fest mit einem der ersten und zweiten Teile (10, 41, 241) der Stütze (9, 29, 229) verbunden ist, und eine zweite Verankerungszone (14, 34, 234), die fest mit dem anderen Teil (11, 44, 244) verbunden ist, umfasst.

7. Passiver und umkehrbarer Mikrosensor nach einem beliebigen der Ansprüche 1 bis 6, **dadurch gekennzeichnet, dass** jede Einheit Rückschlagmittel umfasst, die mit dem Zahnrad assoziiert sind, wobei diese Mittel einen Träger umfassen, der, an einem seiner Enden, mit dem ersten Teil der Stütze fest verbunden ist und umfassend, an seinem anderen Ende, mindestens einen Zahn, der ausgelegt ist, um auf denjenigen des Zahnrads einzugreifen, und wobei vorzugsweise die Zähne des ersten Zahnrads jeweils eine radiale und eine geneigte Oberfläche aufweisen, die das Ende der radialen Oberfläche dieses Zahns mit der Basis der radialen Oberfläche des folgenden Zahns verbindet.

**Claims**

1. Passive and reversible deformation microsensor, specifically for deformation cycles in a direction OX of a structure (49) during cycles of temperatures or mechanical stresses to which said structure (49) is subjected, this microsensor comprising:

    - means (4, 5, 6) for detecting and means for counting cycles of variations in the distance between two points or areas of a structure (49),
    - a support (9, 29, 229) having

        - a first (10, 41, 241) and
        - a second portion (11, 44, 244) attachable to, respectively, either of said two points or areas of the structure (49),

    wherein the detecting means (4, 5, 6) are provided on the support (9, 29, 229), and are associated with each of said first (10, 41, 241) and second (11, 44, 244) portions of the support (9, 29, 229),
    the microsensor being **characterised in that** the detecting means comprise means (541, 542, 543, 551, 552, 553, 561, 562, 563) for distinguishing between at least two different thresholds of cycles of variations in distance,
    the detecting means comprise at least a first and a second detecting assembly (4, 5, 6), each comprising

        - a first toothed wheel (541, 542 , 543) integral with one of the first (10, 41, 241) or second portion (11, 44, 244) and,
        - a driving (64) for driving this first toothed wheel (541, 542, 543), made integral, directly or indirectly, at one of its two ends, to the other of the first (10, 41, 241) or second portion (11, 44, 244) and comprising, at its other end,
        - a tooth (71) able to form a gearing with the teeth of the this first toothed wheel (541, 542 , 543), the pitch p1 of the teeth of the first toothed wheel (541, 542, 543) of the first assembly (4, 5, 6) being different from the pitch p2 of the first toothed wheel (541, 542, 543) of the second assembly (4, 5, 6),
        - 9-shaped driving means (561, 562, 563), having

            - a first O-shaped rigid portion (60) attached to the second portion (44) of the support (29),
            - a second elastic portion (61) one end of which is integral with the first portion while the opposite end is integral with
            - a third portion (62) comprising a L-shaped primary beam (63), one lateral face of which is attached to said second portion (61) while the base is integral with the driving beam (64) with substantially the same length as the primary beam (63) and parallel to this latter, but being thinner,

    wherein the driving beam (64) comprises the tooth (71) at its free end and the first portion of the support (41) is provided with a stop (53) able to restrict the stroke of the primary beam (63) and indirectly the stroke of the driving beam (64).

2. Passive and reversible sensor according to claim 1, **characterised in that** said first and second assemblies are superimposed.

3. Passive and reversible sensor according to claim 1, **characterised in** fact said first and second assemblies are juxtaposed.

4. Passive and reversible sensor according to any one of claims 1 to 3, **characterised in that** said first and second portions of the support have a L shape and are arranged head-to-foot, the bases of the Ls forming an anchor area and one of them being located at one side of the support and the other at the opposite side of the support.

5. Passive and reversible sensor according to any one of claims 1 to 4, **characterised in that** the ends (37, 38) of said first and second portions of the support are connected to each other by an elastic element (35, 36).

6. Passive and reversible sensor according to any one of claims 1 to 5, **characterised in that** it comprises sequentially, in a direction OX, a first anchor area (13, 33, 233) integral with one of said first and second portions (10, 41, 241) of the support (9, 29, 229), and a second anchor area (14, 34, 234) integral with the other portion (11, 44, 244).

7. Passive and reversible sensor according to any one of claims 1 to 6, **characterised in that** each assembly is provided with reverse running stop means associated with the toothed wheel, these means comprising a beam integral, at one of its ends, with the first portion of the support and comprising, at its other end, at least one tooth able to mesh with the teeth of the toothed wheel and, preferably, the teeth of the first toothed wheel each comprises a radial surface and a sloped surface connecting the end of the radial surface of this tooth to the base of the radial surface of the next tooth.

Fig.1a

Fig. 1b

Fig.2

Fig. 3

Fig. 4b

Fig 4a

EP 2 705 330 B1

Fig. 4c

EP 2 705 330 B1

**Fig 5**

29

y
│
○──→ x

15 ○          ○ 17

A et B : positions
initiales

33          A ×          × B          34

16 ○          ○ 18

Fig. 6a

29

y
│
○──→ x

15 ○          ○ 17

33          A' ×          × B'          34

A' et B' : positions
extrêmes

16 ○          ○ 18

$X_{A'} - X_A = UX_A$

$X_{B'} - X_B = UX_B$

$\Delta X = (X_{A'} - X_A) - (X_{B'} - X_B)$

$\Delta Y = 0$

Fig. 6b

Fig.7

Fig.8

EP 2 705 330 B1

Fig. 9a

Fig 9b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5452335 A
- FR 2875324
- EP 1998145 A